# EUROPEAN PATENT APPLICATION

(11) **EP 3 018 494 A1**
(43) Date of publication of application: **11.05.2016**
(21) Application number: 15193062.5
(22) Date of filing: 04.11.2015
(51) Int. Cl.: G01S 15/89, G10K 11/34

(54) **CTFM DETECTION APPARATUS AND UNDERWATER DETECTION APPARATUS**

(30) Priority: 07.11.2014 JP 2014226659
(71) Applicant: Furuno Electric Company Limited, Hyogo (JP)
(72) Inventor: Kozuki, Kohei, Nishinomiya-shi, Hyogo (JP)
(74) Representative: Williams, Michael Ian

(57) **Abstract**

A Continuous Transmission Frequency Modulated (CTFM) detection apparatus is provided. The CTFM detection apparatus includes a projector (2), a receiving element (31a, 31b), a motion mechanism (4), and a target object information generator (18). The projector (2) is configured to transmit a frequency modulated transmission wave and to generate a 3-dimensional transmission beam. The receiving element (31a, 31b) is configured to receive a reflected wave, the reflected wave comprising a reflection of the transmission wave. The motion mechanism (4) is configured to set the receiving element (31a, 31b) in motion and to make a reception beam formed by the receiving element (31a, 31b) scan a 3-dimensional space within the transmission beam. The target object information generator (18) is configured to generate information on target objects within the 3-dimensional space based at least in part on a beat signal generated based at least in part on the transmission wave transmitted by the projector (2) and the reflected wave received by the receiving element (31a, 31b).

## Description

### Technical Field

This disclosure generally relates to a CTFM detection apparatus and an underwater detection apparatus, which detect a target object in 3-dimensional space.

### Background of the Invention

Conventionally-known detection apparatuses include, for example, detection apparatuses disclosed in US2013/215719A1 and "CTFM Sonar SS330" by SUNWEST TECHNOLOGIES [online] [searched on August 29 in 2014] on the Internet (http://www.sunwest-tech.com/SS300%20Broch%20-%20REV%20G.pdf).

In Paragraph [0069], Fig. 19, etc., of US2013/215719A1, a sonar (detection apparatus) is disclosed, which is capable of detecting 360° within the horizontal plane by rotating 180° two sonar elements arranged to transmit sonar signals to opposite directions from each other (or by rotating 360° a single sonar element).

Further, in "CTFM Sonar SS330," a sonar (detection apparatus) is disclosed, which includes a transmitting element capable of generating a beam spreading into a fan-shape (i.e., fan-beam), and a receiving element capable of generating a comparatively narrow beam (i.e., pencil beam). With this detection apparatus, target objects can be detected over a wide range by rotating with a motor the transmitting element and the receiving element.

Furthermore, a scanning sonar is also generally known, which is capable of detecting target objects within a predetermined range in a comparatively short time period by performing, with a 2-dimensionally arranged array, a beamforming on echoes of transmission waves transmitted over all azimuths.

However, since the detection apparatus disclosed in US2013/215719A1 described above is a detection apparatus of a so-called pulse echo method type (i.e. non-continuous transmission of pulse), it comparatively takes time to detect target objects. Specifically, since a time period required to receive a reflected wave resulting from a pulse-shaped transmission wave transmitted to a predetermined azimuth accumulates at every azimuth, it comparatively takes time to detect over a predetermined range.

Further, with the detection apparatus disclosed in "CTFM Sonar SS330" described above, although target objects within a 2-dimensional range where a fan beam spreads can be detected, target objects in 3-dimensional space cannot be detected.

With the scanning sonar described above, multiple elements are required to form the 2-dimensionally arranged array, which causes a cost increase.

### Summary of the Invention

The purpose of this disclosure relates to providing at low cost a CTFM detection apparatus, which is capable of detecting a target object in 3-dimensional space in a short time period.
(1) According to one aspect of this disclosure, a Continuous Transmission Frequency Modulated (CTFM) detection apparatus is provided. The CTFM detection apparatus includes a projector, a receiving element, a motion mechanism, and a target object information generator. The projector is configured to transmit a frequency modulated transmission wave and to generate a 3-dimensional transmission beam. The receiving element is configured to receive a reflected wave, the reflected wave comprising a reflection of the transmission wave. The motion mechanism is configured to set the receiving element in motion and to make a reception beam formed by the receiving element scan a 3-dimensional space within the transmission beam. The target object information generator is configured to generate information on target objects within the 3-dimensional space based at least in part on a beat signal generated based at least in part on the transmission wave transmitted by the projector and the reflected wave received by the receiving element.
(2) The reception beam formed by the receiving element may be a 2-dimensional reception beam. The motion mechanism may set the receiving element in motion in a direction that intersects with a direction in which the 2-dimensional reception beam extends.
(3) The motion mechanism may set the receiving element in motion in a direction perpendicular to the direction in which the 2-dimensional reception beam extends.
(4) The reception beam formed by the receiving element may be of a fan shape.
(5) A receiving surface on which the reflected wave is received by the receiving element may be of a rectangular shape.
(6) The transmission beam generated by the projector may be of a conical shape. The reception beam, set in motion by the motion mechanism, may scan a conical range within the transmission beam.
(7) A transmitting surface from which the transmission wave is transmitted by the projector may be of a circular shape.
(8) The motion mechanism may rotate the receiving element.
(9) An angle formed between a rotational axis of the receiving element and a beam axis of the reception beam may be an acute angle or an obtuse angle.
(10) The motion mechanism may swing the receiving element back and forth.
(11) The detection apparatus may include a plurality of the receiving elements. Receiving surfaces on which the reflected wave are received by each of the plurality of receiving elements may be mutually oriented in different directions.
(12) According to another aspect of this disclosure, an underwater detection apparatus is provided. The underwater detection apparatus is the CTFM detection apparatus with any of the configurations described above.

### Effect(s) of Invention

According to this disclosure, a CTFM detection apparatus capable of detecting a target object in 3-dimensional space in a short time period can be provided at low cost.

### Brief Description of the Drawing(s)

The present disclosure is illustrated by way of example and not by way of limitation in the figures of the accompanying drawings, in which the like reference numerals indicate like elements and in which:
Fig. 1 is a block diagram illustrating a configuration of an underwater detection apparatus according to an embodiment of this disclosure;
Fig. 2 is a chart illustrating a relationship between time and frequency of an ultrasonic wave transmitted by a projector in Fig. 1;
Fig. 3A is a bottom view schematically illustrating two ultrasonic transducers in Fig. 1 along with shapes of reception beams formed by the respective ultrasonic transducers, and
Fig. 3B is a side view schematically illustrating the two ultrasonic transducers in Fig. 1 along with the shapes of the reception beams formed by the respective ultrasonic transducers;
Fig. 4 is a view schematically illustrating a process of detecting a target object by the underwater detection apparatus in Fig. 1, illustrated with a ship on which the underwater detection apparatus is mounted;
Fig. 5 is a block diagram illustrating a configuration of a signal processor in Fig. 1;
Fig. 6 is a chart of one example of a beat signal generated by a first multiplier in Fig. 5;
Figs. 7A and 7B are views for describing a generation of an extracted beat signal, in which Fig. 7A illustrates a waveform of the beat signal outputted from a low-pass filter (i.e., a waveform before the extracted beat signal is extracted), and Fig. 7B illustrates a waveform of the extracted beat signal extracted from the beat signal in Fig. 7A;
Fig. 8A is a side view of transmission and reception beams formed by an underwater detection apparatus according to a modification, illustrated with the ship on which the underwater detection apparatus is mounted, and Fig. 8B is a top view of the transmission and reception beams formed by the underwater detection apparatus according to the modification, illustrated with the ship on which the underwater detection apparatus is mounted;
Fig. 9 is a top view of transmission and reception beams formed by an underwater detection apparatus according to another modification illustrated with the ship on which the underwater detection apparatus is mounted; and
Fig. 10 is a top view of transmission and reception beams formed by an underwater detection apparatus according to still another modification illustrated with the ship on which the underwater detection apparatus is mounted.

### Detailed Description

Hereinafter, an underwater detection apparatus according to one embodiment of this disclosure is described with reference to the appended drawings. The underwater detection apparatus 1 of this embodiment is a CTFM (Continuous Transmission Frequency Modulated)-type detection apparatus, and for example, it is attached to a bottom of a ship (e.g., a fishing boat) and used mainly for detecting target objects (e.g., a single fish or a school of fish). The underwater detection apparatus 1 is also used for detecting undulation of a water bottom, such as a rock reef, and a structural object, such as an artificial fish reef. Moreover, according to the underwater detection apparatus 1, a target object in 3-dimensional space can be detected.

### [Overall Configuration]

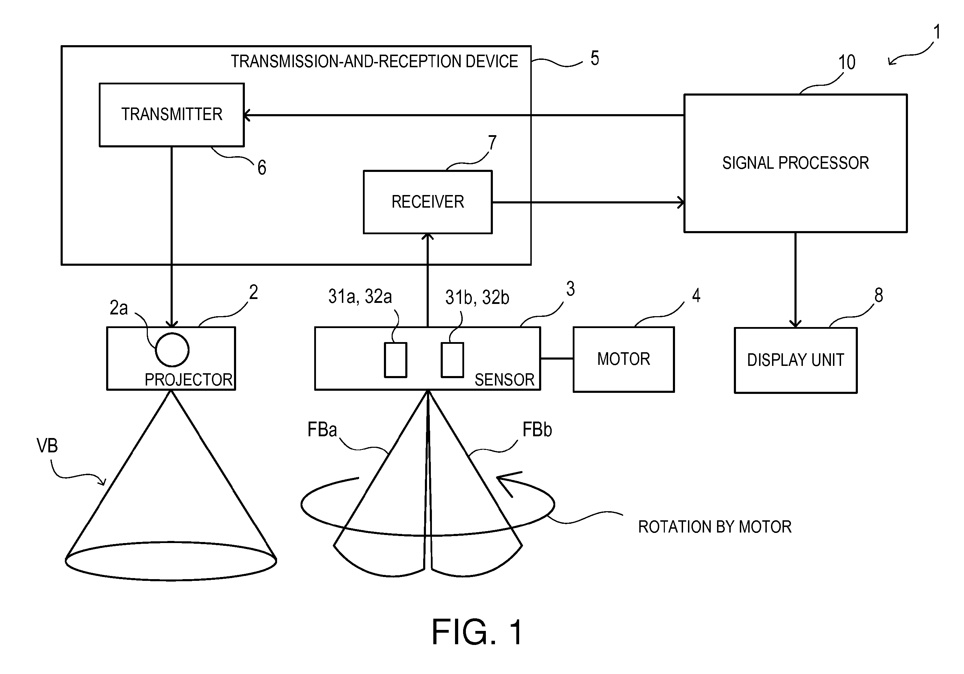

Fig. 1 is a block diagram illustrating a configuration of the underwater detection apparatus 1 of this embodiment. As illustrated in Fig. 1, the underwater detection apparatus 1 includes a projector 2 (which may also be referred to as a transmitting part of a transducer), a sensor 3, a motor 4 (which may also be referred to as a motion mechanism), a transmission-and-reception device 5, a signal processor 10, and a display unit 8.

The projector 2 transmits underwater ultrasonic wave as transmission wave, and is fixed to the bottom of the ship so that a transmitting surface 2a from which ultrasonic wave is transmitted is exposed to the water and faces vertically downward. In this embodiment, the transmitting surface 2a is formed into a circular shape. Thus, the projector 2 of this embodiment is capable of transmitting a 3-dimensional transmission beam VB over a comparatively wide range (i.e., the volume beam). The transmission beam VB has, for example, a conical shape extending downward with the vertex at the projector 2 (in this embodiment, a right conical shape). The opening angle of the conical shape is about 120°. However, this disclosure is not limited as such, and the opening angle may be less than or greater than 120°. For example, the angle may be between 90° and 180°.

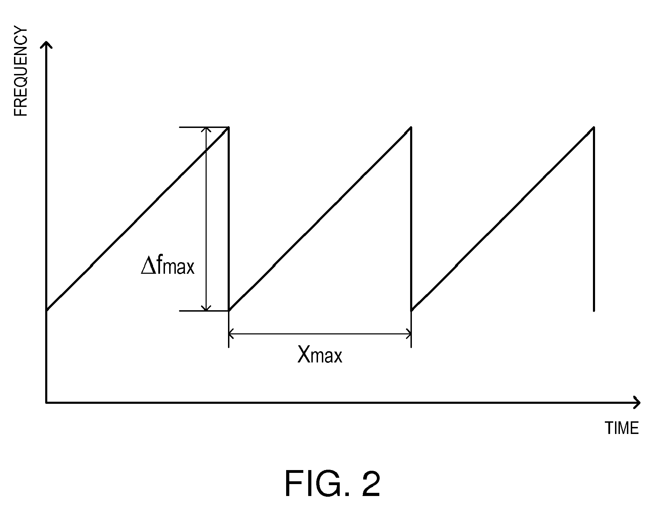

Further, a frequency modulated ultrasonic wave may be transmitted from projector 2. Specifically, the transmission wave is a chirp wave of which frequency gradually changes with time, and the projector 2 continuously transmits by repeatedly transmitting the chirp wave at a particular time cycle. Fig. 2 is a chart illustrating a relationship between time and frequency of the ultrasonic wave transmitted from the projector 2. In Fig. 2, Xₘₐₓ indicates a sweeping time period and Δfₘₐₓ indicates a sweeping bandwidth.

The sensor 3 has a plurality of (in this embodiment, two) ultrasonic transducers 31a and 31b (which may also be referred to as receiving elements). The ultrasonic transducers 31a and 31b have receiving surfaces 32a and 32b where the ultrasonic wave is received, exposed to the water, respectively. Each of the ultrasonic transducers 31a and 31b receives a reflection wave resulting from a reflection of the ultrasonic wave transmitted by the projector 2, and converts it into an electric signal (e.g. a received signal). Note that, the illustration of the ultrasonic transducers 31a and 31b other than the receiving surfaces 32a and 32b is omitted in Fig. 1.

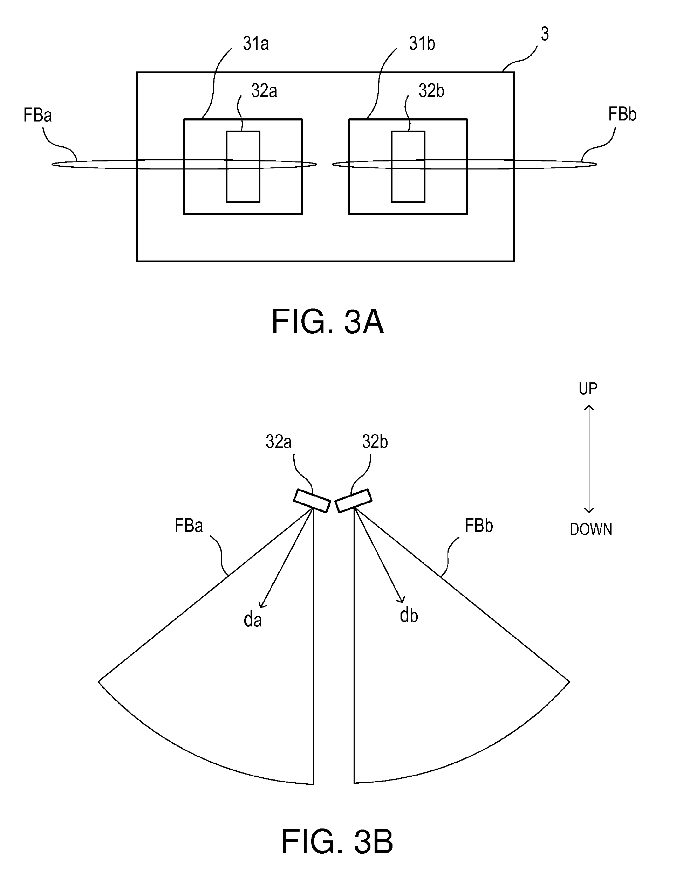

Fig. 3A is a bottom view schematically illustrating the two ultrasonic transducers 31a and 31b in Fig. 1 along with shapes of reception beams FBₐ and FB_{b} formed by the respective ultrasonic transducers 31a and 31b, and Fig. 3B is a side view schematically illustrating the two ultrasonic transducers 31a and 31b in Fig. 1 along with the shapes of the reception beams FBₐ and FB_{b} formed by the respective ultrasonic transducers 31a and 31b. Each of the receiving surfaces 32a and 32b is formed into an oblong rectangular shape in a plan view (when seen from below). Thus, as illustrated in Figs. 3A and 3B, the ultrasonic transducers 31a and 31b generate the reception beams FBₐ and FB_{b} having a fan shape spreading along a surface perpendicular to the longitudinal direction of the receiving surfaces 32a and 32b, respectively. Each of the reception beams FBₐ and FB_{b} is, for example, comparatively thin, as thin as about 6°. Note that, the thickness of each of the reception beams FBₐ and FB_{b} corresponds to the width of the beam in the longitudinal direction of the receiving surfaces 32a and 32b.

The receiving surfaces 32a and 32b are arranged to face downward. Specifically, the receiving surfaces 32a and 32b are arranged so that the surfaces 32a and 32b extend perpendicular to directions dₐ and d_{b}, respectively, the directions dₐ and d_{b}, inclining with respect to the vertically downward direction and oriented away from each other. Moreover, as illustrated in Fig. 3A, the receiving surfaces 32a and 32b are arranged so that short sides of the receiving surfaces 32a and 32b extend in the same direction as each other when seen in the up/down direction. Thus, the reception beams FBₐ and FB_{b} are formed in the same vertical plane. Further, as described above, by arranging the receiving surfaces 32a and 32b to face away from each other, overlapping of the reception beams FBₐ and FB_{b} can be reduced. Therefore, overlapping between detectable ranges of the ultrasonic transducers 31a and 31b can be eliminated or reduced. Note that hereinafter, a beam axis of the reception beam is an axis within the reception beam and extending in a direction where the highest reception sensitivity is obtained.

The motor 4 sets the sensor 3 in motion. Specifically, the motor 4 repeatedly rotates the sensor 3 about a central axis extending vertically at a position between the receiving surfaces 32a and 32b. In other words, each of angles formed between the rotational axis of the sensor 3 and each of the beam axes of the reception beams FBₐ and FB_{b} is not a right angle. In this embodiment, this angle is an acute angle. The sensor 3 rotates within the horizontal plane perpendicular to the vertical direction. The motor 4 repeatedly rotates the sensor 3 by a particular angle at a particular time interval.

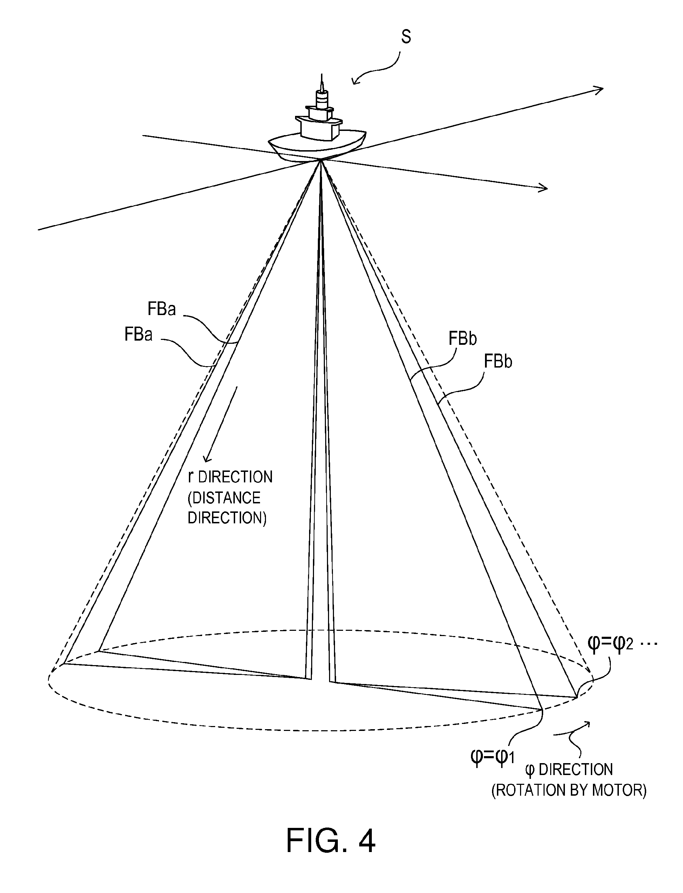

Fig. 4 is a view schematically illustrating a process of detecting the target object by the underwater detection apparatus 1, illustrated with the ship S on which the underwater detection apparatus 1 is mounted. In this embodiment, the motor 4 rotates the sensor 3 to rotate the reception beams FBₐ and FB_{b} formed by the ultrasonic transducers 31a and 31b, within the range of the transmission beam VB generated by the projector 2. Thus, according to the underwater detection apparatus 1 of this embodiment, the target object in 3-dimensional space below the ship (space surrounded by the dashed lines in Fig. 4) can be detected.

The transmission-and-reception device 5 includes a transmitter 6 and a receiver 7.

The transmitter 6 amplifies the frequency modulated transmission signal generated by the signal processor 10 to obtain a high-voltage transmission signal, and applies the high-voltage transmission signal to the projector 2.

The receiver 7 amplifies the electric signal (received signal) outputted by the sensor 3, and A/D converts the amplified received signal. Then, the receiver 7 outputs the received signal converted into a digital signal, to the signal processor 10. Specifically, the receiver 7 has two receive circuits (not illustrated), and each receive circuit performs the processing described above on the received signal obtained by electroacoustically converting the reflected wave received by the corresponding ultrasonic transducer (31a or 31b), and outputs the processed received signal to the signal processor 10.

The signal processor 10 generates the transmission signal (electric signal) and inputs it to the transmitter 6. Further, the signal processor 10 processes the received signal outputted by the receiver 7 to generate an image signal of the target object. The configuration of the signal processor 10 is described later in detail.

The display unit 8 displays, on a display screen, an image corresponding to the image signal outputted by the signal processor 10. In this embodiment, the display unit 8 displays an underwater state below the ship on a PPI (Plan Position Indication) display. Thus, a user can estimate the underwater state below the ship (e.g., a single fish or a school of fish, undulation of the water bottom, whether the structural object, such as an artificial fish reef, exists, and a position thereof) by looking at the display screen.

### [Configuration of Signal Processor]

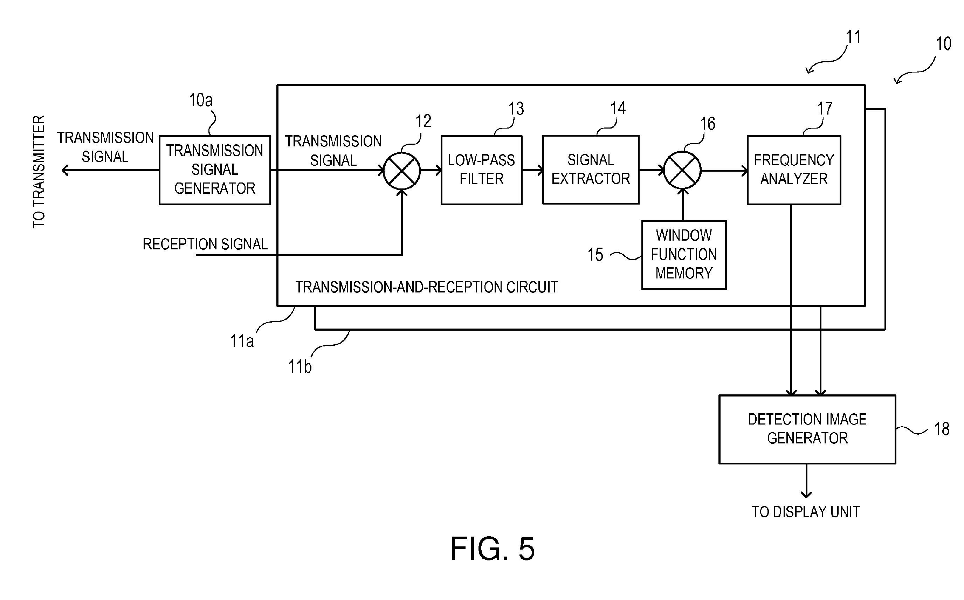

Fig. 5 is a block diagram illustrating a configuration of the signal processor 10. As illustrated in Fig. 5, the signal processor 10 includes a transmission signal generator 10a, a transmission-and-reception processor 11, and a detection image generator 18 (which may also be referred to as a target object information generator or a target object information generating means).

The transmission signal generator 10a generates the transmission signal (electric signal), basis of the transmission wave transmitted by the projector 2. The transmission signal generated by the transmission signal generator 10a is transmitted to the transmitter 6 and the transmission-and-reception processor 11.

The transmission-and-reception processor 11 has two transmission-and-reception circuits 11a and 11b. Each of the transmission-and-reception circuits 11a and 11b receives the transmission signal generated by the transmission signal generator 10a and the received signal generated by the corresponding receive circuit (the received signal obtained by the corresponding one of the ultrasonic transducers 31a and 31b). Specifically, the transmission-and-reception circuit 11a receives the received signal obtained by the ultrasonic transducer 31a, whereas the transmission-and-reception circuit 11b receives the received signal obtained by the ultrasonic transducer 31b.

Each of the transmission-and-reception circuits 11a and 11b includes a first multiplier 12, a low-pass filter 13, a signal extractor 14, a window function memory 15, a second multiplier 16, and a frequency analyzer 17. Note that, each of the transmission-and-reception circuits 11a and 11b performs the same processing except that the received signal inputted to each transmission-and-reception circuit is different as each received signal is generated based on a different ultrasonic transducer.

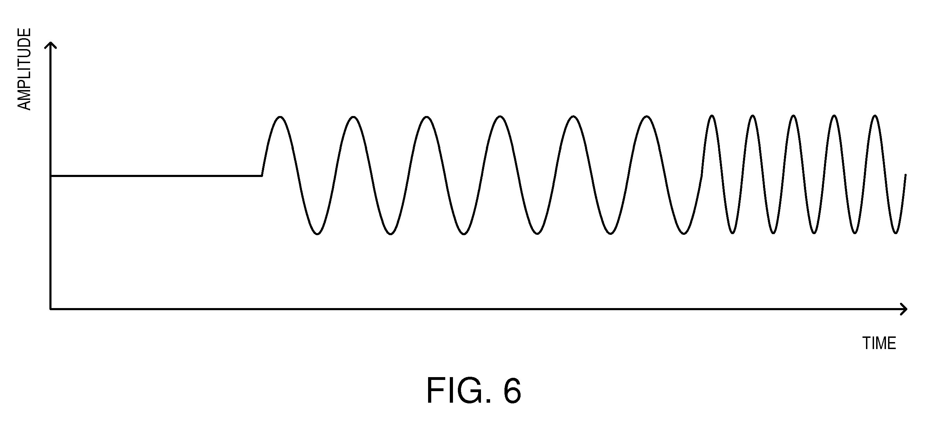

The first multiplier 12 generates a beat signal based on the transmission signal generated by the transmission signal generator 10a and the received signals obtained from the ultrasonic waves received by the ultrasonic transducers 31a and 31b. Specifically, the first multiplier 12 combines (e.g. mixes or multiplies) the transmission signal with the received signals described above to generate the beat signal. Fig. 6 is a chart illustrating one example of the beat signal generated by the first multiplier 12.

The low-pass filter 13 removes an unrequired signal component (which is typically a high frequency component) from the beat signal generated by the first multiplier 12.

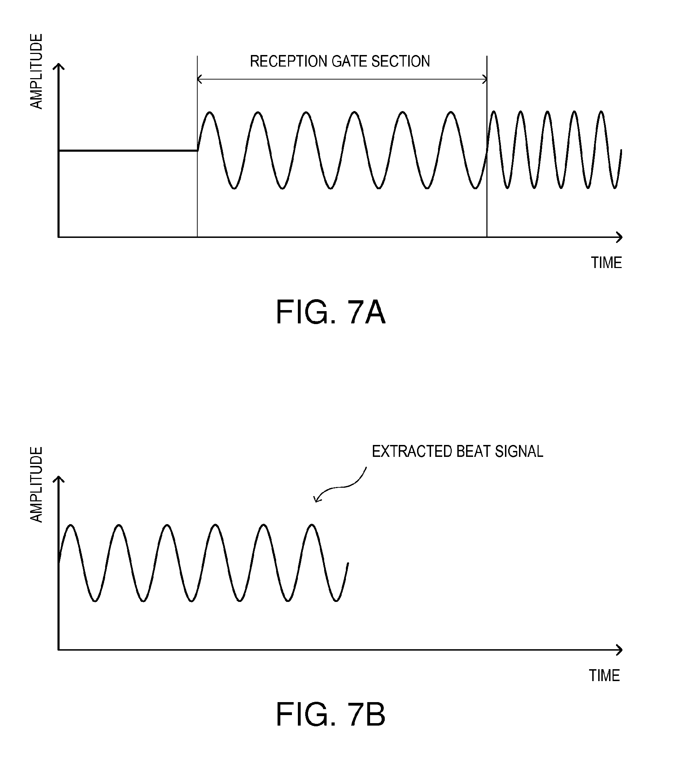

From the beat signal with the unrequired signal component removed by the low-pass filter 13, the signal extractor 14 extracts a signal from within a section so as to process the signal in a post process. Specifically, the signal extractor 14 sets the section to be processed to be a reception gate section, and sets the beat signal within the reception gate section to be the extracted beat signal. Figs. 7A and 7B are views for describing the generation of the extracted beat signal, in which Fig. 7A illustrates a waveform of the beat signal outputted from the low-pass filter (i.e., a waveform before the extracted beat signal is extracted), and Fig. 7B illustrates a waveform of the extracted beat signal extracted from the beat signal in Fig. 7A.

The window function memory 15 stores a particular window function. Further, the second multiplier 16 multiplies the extracted beat signal by the particular window function stored in the window function memory 15.

The frequency analyzer 17 analyzes the output result from the second multiplier 16 (the extracted beat signal multiplied by the window function) and generates data indicating an amplitude and a phase (amplitude spectrum and phase spectrum; hereinafter, they may comprehensively be referred to as the complex spectrum) at each frequency. Examples of the analyzing method include a Discrete Fourier Transform (DFT) and a Fast Fourier Transform (FFT). Note that, by multiplying the extracted beat signal by the window function as described above, side lobes of the complex spectrum generated by the frequency analyzer 17 can be reduced.

Further, in the transmission-and-reception processor 11, the complex spectra corresponding to the ultrasonic transducers 31a and 31b are generated by the transmission-and-reception circuits 11a and 11b, respectively. The complex spectrum generated by each frequency analyzer 17 is outputted to the detection image generator 18.

The detection image generator 18 converts a horizontal axis of the complex spectrum generated by each of the transmission-and-reception circuits 11a and 11b from a frequency into a distance (e.g. a distance from the ship) to generate echo data (complex amplitude data of the echo at each distance from the ship). A coefficient for the conversion from the frequency into the distance may be calculated to perform the conversion based on the sweeping bandwidth of the transmission signal, the sweeping time period of the transmission signal, and the underwater sound speed.

Further, based on the received signal corresponding to a rotational angular position that is gradually changed by the motor 4 (ϕ= ϕ₁, ϕ₂, ... in Fig. 4), the detection image generator 18 generates echo data of the respective angular positions, and combines them to generate echo data within a 3-dimensional (right conical, in this embodiment) detection area. Here, the rotational speed of the motor 4 may need to be set so that a time period for rotating by the angle corresponding to the thickness of each of the reception beams FBₐ and FB_{b} becomes longer than a time period corresponding to the reception gate section at the transmission-and-reception processor 11. In a case of shortening the detection time as much as possible, the rotational speed of the motor 4 may be set so that both of the time periods match with each other.

### [Simulation Result]

Hereinafter, a detection time for detecting a target object by the underwater detection apparatus 1 of this embodiment is compared, through simulation, with a detection time for detecting the target object by a known (general) underwater detection apparatus (underwater detection apparatus using mechanical scanning based on a pulse echo method). When the sensors of the apparatuses require the same number of rotation steps to detect the entire horizontal circumference of the ship, by comparing a time period to receive an echo at a single azimuth, a detection time for the entire circumference can be compared. Therefore, hereinafter, the detection time of the underwater detection apparatus 1 of this embodiment is compared with that of by the known underwater detection apparatus, by comparing the time period to receive an echo at a single azimuth. The simulation is performed under a condition that the detection range is 25m, a range resolution is 0.19m, and a CTFM sweep bandwidth is 15 kHz.

As a result of simulation under such a condition described above, the detection time of the known underwater detection apparatus to receive an echo at a single azimuth was 33ms. Note that, this value was calculated based on a propagation time of an ultrasonic wave within the detection range. Specifically, the value is obtained by dividing a propagation distance of the ultrasonic wave (twice the detection range, 50m in the simulation described above) by the speed of the ultrasonic wave underwater (1,500m/s).

Whereas, the detection time of the underwater detection apparatus 1 was 9ms. Note that, this value was calculated based on the condition of the simulation described above. Specifically, when the detection range is 25m and the range resolution is 0.19m, the range resolution is 1/133 in ratio, and therefore, a value obtained by multiplying the CTFM sweeping bandwidth (15 kHz) by 1/113, 0.11 kHz, is a frequency resolution. A time period to achieve this frequency resolution can be calculated as 9ms by taking an inverse number of 0.11 kHz.

As described above, it was confirmed that about 3.6 times of increase in speed compared to the conventional method (the pulse echo method) could be achieved with the underwater detection apparatus 1 of this embodiment.

### [Effects]

As above, with the underwater detection apparatus 1 of this embodiment, the detection over the 3-dimensional space within the range of the 3-dimensional transmission beam VB is performed by setting the sensor 3 in motion. Thus, according to the underwater detection apparatus 1, the detection over the 3-dimensional space can be performed. Moreover, the receiving elements do not need to be arranged 2-dimensionally or 3-dimensionally as they are arranged in a conventional scanning sonar, and a number of receiving elements can be reduced. Therefore, the apparatus can be simplified.

Further, since the underwater detection apparatus 1 detects the target object by using a CTFM method, compared to the case of adopting the pulse echo method, a time for detecting over a particular range can be shortened. More specifically, since the CTFM method is adopted, the underwater detection apparatus 1 can receive the ultrasonic wave at a single azimuth in a time period shorter than the time period for the round-trip propagation of the detection range by the ultrasonic pulse. Thus, the echo intensity at a single azimuth can be obtained in a comparatively short time period, and as a result, the time period for detecting the particular range can be shortened.

Further, with the underwater detection apparatus 1, since the transmission beam VB has the 3-dimensional shape, a single transmission of the ultrasonic wave can cover the detection target area for the target object. In this manner, the projector 2 does not need to be moved in order to run through the entire detection area. Therefore, the apparatus can be simplified.

Therefore, according to the underwater detection apparatus 1, a CTFM detection apparatus capable of detecting a target object in 3-dimensional space in a short time period can be provided at low cost.

Further, with the underwater detection apparatus 1, the 2-dimensional reception beams FBₐ and FB_{b} are moved in the direction that intersects with the direction in which the 2-dimensional reception beams extend. Therefore, the 3-dimensional space can be scanned with the reception beams FBₐ and FB_{b}. Furthermore, by forming the reception beams FBₐ and FB_{b} into a 2-dimensional shape, the target object can be detected in a short time period, for example, compared to the case of scanning within the transmission beam with a pencil-shape reception beam.

Further, with the underwater detection apparatus 1, the 2-dimensional reception beams FBₐ and FB_{b} are moved in the direction perpendicular to the direction in which the 2-dimensional reception beams extend. Therefore, the detection can be performed over a comparatively wide 3-dimensional space spreading from the underwater detection apparatus 1.

Further, with the underwater detection apparatus 1, by moving the fan-shaped reception beams FBₐ and FB_{b}, the detection can be performed over a comparatively wide 3-dimensional space below the ship.

Further, with the underwater detection apparatus 1, the receiving surfaces 32a and 32b are formed into the oblong rectangular shape. Therefore, the 2-dimensional reception beams FBₐ and FB_{b} can suitably be formed.

Further, with the underwater detection apparatus 1, the projector 2 generates the conically shaped transmission beam VB (in this embodiment, right conical shape), and the sensor 3 scans the range of the transmission beam VB. Therefore, the detection can be performed over a wide range below the ship.

Further, with the underwater detection apparatus 1, the transmitting surface 2a is formed into the circular shape. Therefore, the 3-dimensional transmission beam VB can suitably be formed.

Further, with the underwater detection apparatus 1, the sensor 3 is rotated by the motor 4. Therefore, a CTFM detection apparatus capable of detecting 3-dimensional space can be constructed with a comparatively simple configuration.

Further, with the underwater detection apparatus 1, each of the angles formed between the rotational axis of the sensor 3 and each of the beam axes of the reception beams FBₐ and FB_{b} formed by the ultrasonic transducers 31a and 31b is one of zero degree, the acute angle, and the obtuse angle. In other words, the rotational axis does not intersect perpendicularly with the beam axes of the reception beams FBₐ and FB_{b}. In this manner, the detection can be performed over a wide 3-dimensional space compared to the case where the rotational axis of the sensor is perpendicular to the beam axes.

Further, with the underwater detection apparatus 1, the receiving surfaces 32a and 32b are mutually oriented in the different directions dₐ and d_{b}. Therefore, the detectable range at each angular position (ϕ in Fig. 4) can be extended.

Further, with the underwater detection apparatus 1, an underwater detection apparatus capable of detecting a target object in 3-dimensional space in a short time period can be provided at low cost.

### [Modifications]

Although the embodiment of this disclosure is described above, this disclosure is not limited thereto, and may be modified in various forms without deviating from the scope of this disclosure.

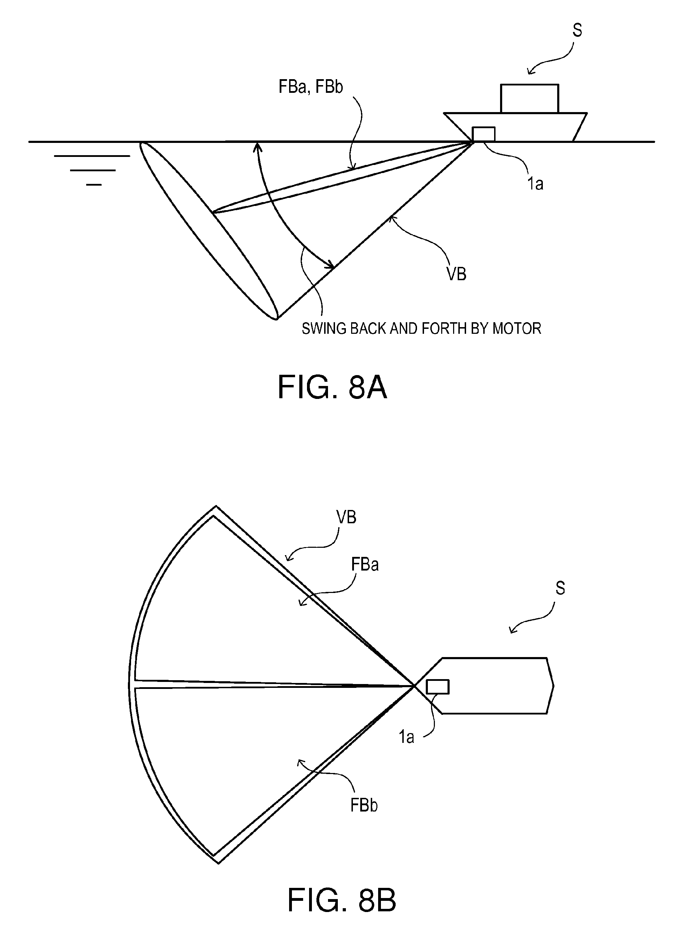

(1) Fig. 8A is a side view of transmission and reception beams formed by an underwater detection apparatus 1a according to a modification, illustrated with the ship S on which the underwater detection apparatus 1a is mounted, and Fig. 8B is a top view of the transmission and reception beams formed by the underwater detection apparatus 1a according to this modification, illustrated with the ship S on which the underwater detection apparatus 1a is mounted. The underwater detection apparatus 1 of the above embodiment detects below the ship; however, without limiting to this, it may detect a forward area of the ship, for example, as the underwater detection apparatus 1a of this modification. Specifically, the underwater detection apparatus 1a of this modification is provided as a forward detection sonar capable of detecting reef, etc., that may cause stranding in the forward area of the ship. Hereinafter, differing points from the above embodiment are mainly described, and description of other points is omitted. Note that, compared to the underwater detection apparatus 1 of the above embodiment, the underwater detection apparatus 1a of this modification greatly differs with regard to the area that can be detected, and the configuration thereof is substantially the same as the configuration in Fig. 1.

The underwater detection apparatus 1a of this modification includes a projector 2 having a similar configuration to the above embodiment. However, in this modification, the projector 2 is fixed to a front side of the ship so that a transmitting surface thereof inclines forward of the ship with respect to the vertical direction. Thus, with the underwater detection apparatus 1a of this modification, a transmission beam VB formed into a volume beam is generated to extend both forward of the ship and underwater. For example, the transmission beam VB is of a conical shape so that it covers 0° to 45° when the horizontal direction is 0° and the vertically downward direction is 90°, and also covers a range from 45° on the starboard side to 45° on the port side.

Further, the underwater detection apparatus 1a of this modification includes a sensor 3 having a similar configuration to the above embodiment. Two ultrasonic transducers 31 a and 31b are arranged in the left-and-right directions of the ship. However, in this modification, the sensor 3, similar to the case of the projector 2, is fixed to the front side of the ship so that a receiving surface thereof inclines forward of the ship with respect to the vertical direction. Thus, with the underwater detection apparatus 1a of this modification, reception beams FBₐ and FB_{b} are formed to extend both forward of the ship and underwater. For example, the reception beam FBₐ of this modification is formed into a 2-dimensional shape in which the thickness in the up-and-down directions is comparatively thin, as thin as about 6°, and covers, when the forward direction is 0°, a range from 45° to 0° on the starboard side. The reception beam FB_{b} is, for example, formed into a 2-dimensional shape in which the thickness in the up-and-down directions is comparatively thin, as thin as about 6°, and covers, when the forward direction is 0°, a range from 0° to 45° on the port side.

Further, the sensor 3 of this modification is inclined upward or downward by the motor 4 so as to vertically swing back and forth. Thus, the reception beams FBₐ and FB_{b} can be vertically swung back and forth. Therefore, the detection can be performed 3-dimensionally over the forward area of the ship.

As described above, also by swinging the reception beams FBₐ and FB_{b} of this modification, similar to the underwater detection apparatus 1 of the above embodiment, a CTFM detection apparatus capable of detecting a target object in 3-dimensional space in a short time period can be provided at low cost.

Further, with the underwater detection device of this modification, since the sensor 3 is swung back and forth, a CTFM detection apparatus capable of suitably detecting over a detection area extending in a particular direction (e.g. forward of the ship) can be constructed with a comparatively simple configuration. Note that, in this modification, the direction of arrangement of the two ultrasonic transducers 31a and 31b may be in the front-and-rear directions (bow and stern directions) of the ship, and the moving direction of the reception beams FBₐ and FB_{b} may be in the left-and-right directions.
(2) In the above embodiment, the transmitting surface 2a is formed into a circular shape so that the transmission beam VB has a right conical shape; however, it is not limited to this. Specifically, for example, the transmitting surface may be formed into an oblong rectangular shape having a particular aspect ratio so that the transmission beam has an elliptical conical shape or other conical shapes.

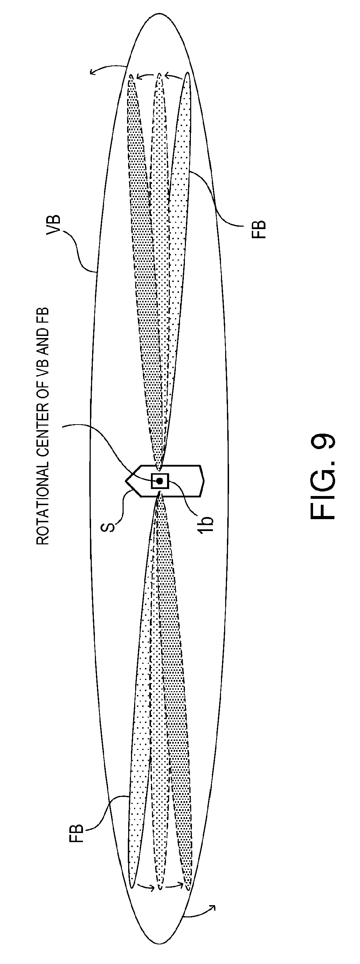

(3) Fig. 9 is a top view of a transmission beam VB and a reception beam FB formed by an underwater detection apparatus 1b according to another modification, illustrated with the ship S on which the underwater detection apparatus 1b is mounted. With the underwater detection apparatus 1b of this modification, not only the reception beam FB, but the transmission beam VB is also rotated. Note that in Fig. 9, the reception beams FBₐ and FB_{b} formed by the ultrasonic transducers 31a and 31b are comprehensively illustrated as the reception beam FB.

As illustrated in Fig. 9, the transmission beam VB generated by the underwater detection apparatus 1b of this modification is generated into a volume beam shape wider (longer in the thickness direction) compared to the reception beam FB (specifically, elliptical conical shape). The volume beam VB with such a shape can be generated, for example, by forming the transmitting surface into an oblong rectangular shape. In the case of this modification, the aspect ratio of the transmitting surface is closer to 1 compared to the aspect ratio of the receiving surface of the receiving element. Further, the transmission beam VB is rotated by the motor in the direction indicated by the arrows in Fig. 9, at the same rotational speed as the reception beam FB. The width (the length in the thickness direction) of the transmission beam VB can be determined based on a ratio of a time period of a reception gate section set by the underwater detection apparatus 1b of this modification with respect to a time period for the round trip propagation of the detection range by the ultrasonic pulse. For example, if this ratio is 1/3, by setting the transmission beam VB to be wider (longer in the thickness direction) than the range corresponding to three steps of rotation of the reception beam FB (see Fig. 9), even when the sensor is rotated without waiting for a return of the reflection wave at a particular rotational angle, the reflection wave can be received at the rotated angle. Therefore also in this modification, similar to the above embodiment, a CTFM detection apparatus capable of detecting a target object in 3-dimensional space in a short time period can be provided at low cost.

Furthermore, according to this modification, the ultrasonic wave transmitted from the projector generating the transmission beam VB is not transmitted to all azimuths, and the transmission wave is transmitted only to the azimuth where the reception of the echo by the sensor is performed. Thus, the transmission wave can be transmitted with concentrated energy to a particular direction. Therefore, an electric power for transmitting the transmission wave can be reduced. Thus, a CTFM detection apparatus effective in saving energy can be provided.

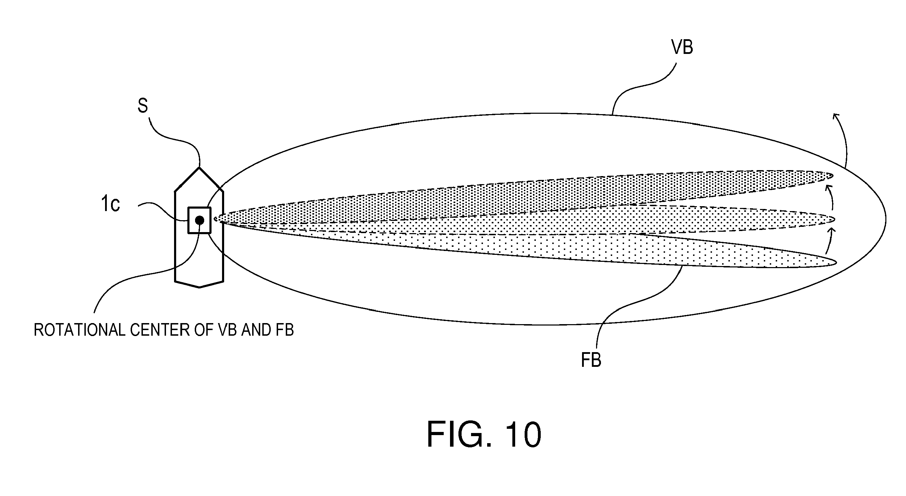

(4) Fig. 10 is a top view of a transmission beam VB and a reception beam FB formed by an underwater detection apparatus 1c according to another modification illustrated with the ship S on which the underwater detection apparatus 1c is mounted. The underwater detection apparatus 1c of this modification has a configuration different from the underwater detection apparatus 1b in Fig. 9 in that one of the two ultrasonic transducers 31a and 31b is omitted. Specifically, the underwater detection apparatus 1c of this modification has one receiving element.

Further, also with the underwater detection apparatus 1c of this modification, similar to the underwater detection apparatus 1b in Fig. 9, the transmission beam VB is rotated by the motor in the direction indicated by the arrow in Fig. 10, at the same rotational speed as the reception beam FB. Thus, also with the underwater detection apparatus 1c including only one receiving element, effects similar to the case of the underwater detection apparatus 1b in Fig. 9 can be obtained.
(5) The transmission-and-reception processor 11 of the above embodiment includes the window function memory 15 and the second multiplier 16; however, without limiting to this, the window function memory and the second multiplier may be omitted from the configuration of the transmission-and-reception processor. Thus, deterioration of a resolution of a main lobe can be suppressed.
(6) In the first multiplier 12 of the transmission-and-reception processor 11 of the above embodiment, the transmission signal generated by the transmission signal generator 10a and the received signals corresponding to the waveform of the ultrasonic waves received by the ultrasonic transducers 31a and 31b are combined (e.g. mixed or multiplied) with each other to generate the beat signal; however, without limiting to this, a signal based on the transmission signal and a signal based on the received signal may be combined. For example, a signal that causes a frequency offset on the transmission signal and the received signals may be combined to generate the beat signal. In this manner, echo data in which influence of a direct current offset that may occur due to the A/D conversion by the receiver 7 is reduced can be obtained as the output of the transmission-and-reception processor 11.
(7) In the above embodiment, the combining of the transmission signal with the received signals is performed as the digital signal processing; however, it may be performed as analog signal processing. In this case, the first multiplier 12 is disposed in the transmission-and-reception device 5 instead of the transmission-and-reception processor 11, and the combining described above is performed before the received signals are A/D converted by the receiver 7.
(8) In the above embodiment, the frequency modulated continuous wave is transmitted by the projector 2; however, without limiting to this, a frequency modulated pulse wave having a pulse width corresponding to a time period longer than that of a round-trip propagation of the detection range by the ultrasonic wave may be transmitted by the projector.
(9) In the above embodiment and modifications, the underwater detection apparatus is described as the CTFM detection apparatus as an example; however, without limiting to this, a radar, etc., may be given as the CTFM detection apparatus.

## Claims

1. A Continuous Transmission Frequency Modulated (CTFM) detection apparatus comprising:
a projector (2) configured to transmit a frequency modulated transmission wave and to generate a 3-dimensional transmission beam;
a receiving element (31a, 31b) configured to receive a reflected wave, the reflected wave comprising a reflection of the transmission wave;
a motion mechanism (4) configured to set the receiving element (31a, 31b) in motion and to make a reception beam formed by the receiving element (31a, 31b) scan a 3-dimensional space within the transmission beam; and
a target object information generating means (18) configured to generate information on target objects within the 3-dimensional space based at least in part on a beat signal generated based at least in part on the transmission wave transmitted by the projector (2) and the reflected wave received by the receiving element (31a, 31b).

2. The CTFM detection apparatus of claim 1, wherein
the reception beam formed by the receiving element (31a, 31b) is a 2-dimensional reception beam; and
the motion mechanism (4) sets the receiving element (31a, 31b) in motion in a direction that intersects with a direction in which the 2-dimensional reception beam extends.

3. The CTFM detection apparatus of claim 2, wherein
the motion mechanism (4) sets the receiving element (31a, 31b) in motion in a direction perpendicular to the direction in which the 2-dimensional reception beam extends.

4. The CTFM detection apparatus of claim 2 or claim 3, wherein
the reception beam formed by the receiving element (31a, 31b) is of a fan shape.

5. The CTFM detection apparatus of claim 4, wherein
a receiving surface on which the reflected wave is received by the receiving element (31a, 31b) is of a rectangular shape.

6. The CTFM detection apparatus of any of the preceding claims, wherein
the transmission beam generated by the projector (2) is of a conical shape; and
the reception beam, set in motion by the motion mechanism (4), scans a conical range within the transmission beam.

7. The CTFM detection apparatus of claim 6, wherein
a transmitting surface from which the transmission wave is transmitted by the projector (2) is of a circular shape.

8. The CTFM detection apparatus of any of the preceding claims, wherein
the motion mechanism (4) rotates the receiving element (31a, 31b).

9. The CTFM detection apparatus of claim 8, wherein
an angle formed between a rotational axis of the receiving element (31a, 31b) and a beam axis of the reception beam is an acute angle or an obtuse angle.

10. The CTFM detection apparatus of any one of claims 1 to 7, wherein
the motion mechanism (4) swings the receiving element (31a, 31b) back and forth.

11. The CTFM detection apparatus of any of the preceding claims further comprising:
a plurality of the receiving elements (31a, 31b); wherein
receiving surfaces on which the reflected wave is received by each of the plurality of receiving elements (31a, 31b) are mutually oriented in different directions.

12. An underwater detection apparatus comprising the CTFM detection apparatus of any of the preceding claims.
